# EUROPEAN PATENT APPLICATION

(11) **EP 1 690 782 A1**
(43) Date of publication of application: **16.08.2006**
(21) Application number: 06388007.4
(22) Date of filing: 15.02.2006
(51) Int. Cl.: B62K 13/04, B62K 27/14

(54) **Bike trailer**

(30) Priority: 15.02.2005 DK 200500219
(71) Applicant: Triobike A/S, 1459 Copenhagen K (DK)
(72) Inventor: Hessburg-Eisinger, Sammy, 2450 Copenhagen SV (DK)
(74) Representative: Jensen, Peter Kim

(57) **Abstract**

A bike trailer (2) for coupling to a bike (1) including a frame (10), a front fork (13) being pivotal around a steering axis in relation to the frame (10), and a front wheel located at the free end (16) of the front fork (13). Said bike trailer (2) includes a first frame part (20), a frame coupler located on the first frame part (20) and by means of which the first frame part (20) can be coupled stiffly to the frame (10) of the bike (1), a first wheel (31) and a second wheel (32) located substantially parallel to each other, and which can be steered around a steering axis with a view to adjusting the direction of travelling, and a steering mechanism dirigibly connected to the wheels (31, 32), so that the direction of travelling can be adjusted by means of the steering mechanism. The steering mechanism includes a steering bracket adapted to be coupled to the free end (16) of the front fork (13) when the front wheel of the bike (1) is removed. The steering axis of the first wheel (31) and the second wheel (32) are displaced in the longitudinal direction of the bike trailer (2) in relation to the steering axis of the bike when the bike trailer (2) is coupled to the bike (1).

## Description

The present invention relates to a bike trailer for coupling to a bike, said bike including a frame, a front fork being pivotal around a steering axis in relation to the frame, and a front wheel located at the free end of the front fork, said bike trailer including: a first frame part, a frame coupler located on the first frame part and by means of which the first frame part can be coupled stiffly to the frame of the bike, a first wheel and a second wheel placed substantially parallel to each other, and which can be steered around a steering axis with a view to adjusting the direction of travelling, and a steering mechanism dirigibly connected to the wheels, so that the direction of travelling can be adjusted by means of the steering mechanism, said steering mechanism including a steering bracket adapted to be coupled to the free end of the front fork when the front wheel of the bike is removed. The invention also relates to a bike combination including said bike trailer and a bike including a frame, a front fork being pivotal around a steering axis in relation to the frame, and a front wheel placed at the free end of the front fork.

Bike trailers, which can be secured at the rear end of a bike, and which can be used to transport goods or persons, are well-known. Carrier bikes, such as Christiania bikes, are also well-known for the same purpose.

Convertible bikes, which can be converted from e.g. a bicycle into a tricycle, are also well-known. An example of such a convertible bike is described in the European patent application EP 0 863 067 A1 which relates to a three-wheel vehicle for several purposes, especially transport of walking-impaired people or goods. This can be done by coupling a wheel chair or a trailer with two parallel wheels to the front of an ordinary bike, the front wheel of which has been removed. The coupling is kept stiff by means of a bracket with an upper part and a lower part. The upper part of the bracket is connected to the frame of the bike, e.g. by fastening it around the head tube of a bike, and the lower part of the bracket is connected to the wheel chair or the trailer. The shank of a T-piece is inserted into the lower part of the bracket. The remaining part of the T-piece has two ends, on which the front fork is fastened by means of a quick locking system so that the vehicle can be steered by means of the handlebars. The front wheel of the ordinary bike can be installed in a specific holder located at the rear wheel opposite the carrier.

The drawback of the trailer described in EP 0 863 067 A1 is that the wheels are located at a distance from the T-piece, which is fitted in the lower part of the bracket. This implies that a great moment is required, and thus much strength is needed to turn the wheelchair or cargo trailer when wishing to turn. Thus the roadability of this bike is bad. This becomes even more distinct upon wishing to secure a large goods trailer to the bike, as, with a view to balance equilibrium, it is desirable that the parallel wheels are located substantially at the centre of the trailer in the longitudinal direction. In this case the moment required to turn the trailer is very large.

Thus the object of the invention is to provide a bike carrier intended to be coupled to an ordinary two-wheel bike, and having improved roadability.

According to the invention, this is achieved in that the bike trailer described in the introduction is characterised in that the steering axis of the first wheel and the steering axis of the second wheel are displaced in the longitudinal direction of the bike trailer in relation to the steering axis of the bike when the bike trailer is coupled to the bike. Hereby it is achieved that the moment required to turn the bike trailer is decreased considerably, whereby much less strength is needed to steer the bike with the bike trailer. As a result hereof, roadability is improved.

According to a particular embodiment, the first wheel and the second wheel are adapted to pivot around a common steering axis and are interconnected via a transverse frame part. Hereby the very bike trailer can be turned together with the wheels, achieving an even better roadability.

According to a preferred embodiment, the first frame part is connected to the transverse frame part via a first swivel joint defining the common steering axis, the steering bracket is connected to the first frame part via a second swivel joint, and at least one steering arm is pivotal connected to the steering bracket and the transverse frame part. Hereby a particularly simple steering mechanism is obtained for the bike trailer, where the steering mechanism e.g. includes a parallelogram linkage or a trapezium linkage.

Preferably the steering mechanism has two steering arms located at opposite ends of the first frame part. Hereby increased stability and sturdiness is obtained for the steering mechanism.

According to a further embodiment, the trailer can be used as a push or pull barrow when it is not coupled to the bike. Hereby the bike trailer can e.g. be used as a barrow for transporting goods.

According to a particular embodiment, the bike trailer has a third wheel, which preferably can be folded up under the trailer when said trailer is used as a bike trailer, and which can be folded down when the trailer is used as a push or pull barrow. Hereby further stability and improved manoverability are achieved when using the trailer as a push or pull barrow.

According to another embodiment, the bike trailer has a chassis with at least one child seat preferably provided with a belt for securing a child. Hereby children can be secured when the bike trailer is used together with the bike.

In a preferred embodiment the bike trailer is provided with securing means for securing the front wheel of the bike. Said securing organs can e.g. be placed so that the front wheel can be stored under the chassis. Hereby it is achieved that the front wheel does not soil the inside of the chassis, and further additional room is obtained for goods and/or children.

According to a particular embodiment, the bike trailer is provided with handlebars extending from the rear end of the bike trailer and which can be folded up or down. Hereby it is achieved that the handlebars of the trailer do not interfere with the handlebars of the bike when the bike and the bike trailer are coupled. Additionally the handlebars of the trailer can be adapted to cover the frame coupling device when said handlebars are folded down, whereby it is ensured that oil or other dirt from the coupling organ does not soil clothes when the trailer is used as push or pull trailer. It is also possible to use the handlebars of the trailer as alternative handlebars when the bike and the bike trailer are coupled.

According to a preferred embodiment, the bike trailer has a brake system, where a first brake cable at a first end is connected to a cable distributor, said cable distributor in turn being connected to a fist brake cable part and a second brake cable part, which are connected to a braking mechanism, preferably in the form of rim brakes or disc brakes at the first wheel and the second wheel respectively, a pull of the first brake cable causing a braking of the first wheel and the second wheel. Hereby it is achieved that the two wheels of the bike trailer are braked equally, whereby it is ensured that the bike trailer does not turn unintentionally upon braking.

Preferably the first brake cable is furthermore connected to a brake lever at the bike trailer. Hereby a particularly simple way of braking the bike trailer is achieved.

The object of the invention is also obtained by means of a bike combination including a bike trailer as described above and a bike including a frame, a front fork being pivotal around a steering axis in relation to the frame, and a front wheel placed at the free end of the front fork.

According to a particular embodiment of the bike combination, the frame is provided with a frame coupling device adapted to be coupled to the frame coupler located on the first frame part of the bike trailer, whereby the frame and the first frame part are interconnected stiffly. Thus the bike and the bike trailer can be adapted to each other, whereby a particularly desirable and robust coupling of the two parts is obtained.

According to a preferred embodiment, the frame coupling device is formed as a coupling pipe, and the frame coupler is formed as an expansion device adapted to be inserted into the coupling pipe in such a way that, after expansion, the expansion device abuts the inner side of the coupling device. Hereby a particularly simple and at the same time sturdy coupling of the bike and the bike trailer can be obtained.

According to a particular embodiment of the invention, the expansion device includes a first outwardly facing cone surface and at least one expansion part with a first inwardly facing cone surface abutting the first outwardly facing cone surface, an axial displacement of the expansion part in relation to the first outwardly facing cone surface causing a radially outward displacement of the expansion part. Hereby a particularly simple design of the expansion device is obtained.

According to another embodiment, the expansion device includes a housing including the first outwardly facing cone surface and a body with a second outwardly facing cone surface, said body being slidable in relation to the housing, and the expansion part includes a second inwardly facing cone surface abutting the outwardly facing cone surface.

Preferably the expansion device includes a quick lock device which pulls the slidable body in the direction of the housing when pivoted. Hereby it is achieved that the user can couple or decouple the bike trailer to/from the bike by means of the quick lock device very quickly.

According to a particular embodiment, the expansion device includes at least two, preferably four, expansion parts jointly defining a bush with an inwardly facing cone surface at both ends. Hereby it is achieved that the expansion device can be coupled particularly sturdily to the coupling tube.

According to an alternative embodiment, the frame coupling device includes a coupling tube with a flange or rim provided with an internal screw thread, the flange having at least two axial recesses or bores in its terminal surface, and the trailer coupling device has at least two axially extending projections adapted to engage with the bores of the flange, and is furthermore provided with a cap provided with an internal thread adapted to be screwed onto the external screw thread of the flange. The coupling between the bores of the flange and the projections of the trailer coupling device ensures that the frame coupling device and the trailer coupling device can not be turned in relation to each other, and the thread connection ensures that the two devices remain engaged. Preferably the flange has a central bore and two additional bores radially spaced at the centre of the terminal surface of the flange, and the trailer coupling device has three corresponding projections. The projection which is to be inserted into the central bore can e.g. be provided with the above expansion device. Alternatively the trailer coupling device can be provided with bores, while the flange is provided with projections. As a further alternative the very frame coupling tube can be formed like an extending connection piece with an external screw thread.

According to another embodiment of the invention, the bike has a brake system which can be coupled with the brake system of the bike trailer. Hereby a cyclist can brake the bike trailer and the bike by means of the brake system of the bike, and thus the cyclist does not need to think about having to use an additional brake system for braking the bike trailer.

According to a preferred embodiment, the brake system of the bike has a brake coupling device including a slotted grip device, and the first brake cable of the bike trailer has a head at a second end, said head being adapted to engage the slotted grip device, said brake coupling device being connected to the brake cable of the bike which is preferably connected to the brake lever of the bike. Hereby it is achieved that the brake systems can be coupled in a particularly simple way, whereby the two brake systems can quickly be coupled or decoupled when the bike trailer is coupled to the bike and decoupled respectively, and at the same time a secure way of braking the bike trailer is maintained.

According to a particular embodiment of the invention, the second end of the first brake cable is secured on or at the steering bracket by means of a securing device. Hereby it is ensured that it is possible to get hold of the second end of the first brake cable quickly and easily when the two brake systems are to be coupled.

The invention is explained in detail below by means of an embodiment shown in the drawings, in which
Fig. 1 is a side view of a bike combination according to the invention,
Fig. 2 is a diagonal view of the bike combination from behind,
Fig. 3 is a side view of the bike according to the invention,
Fig. 4 is a side view of the bike trailer according to the invention,
Fig. 5 is a perspective view of the bike trailer,
Fig. 6 is a perspective view of the frame and steering mechanism of the bike trailer,
Fig. 7 is a perspective view of a steering bracket and brake coupling of the bike trailer according to the invention,
Fig. 8 illustrates a part of the brake system of the bike trailer from below, and
Fig. 9 is a perspective view of a trailer coupling device of the bike trailer according to the invention.

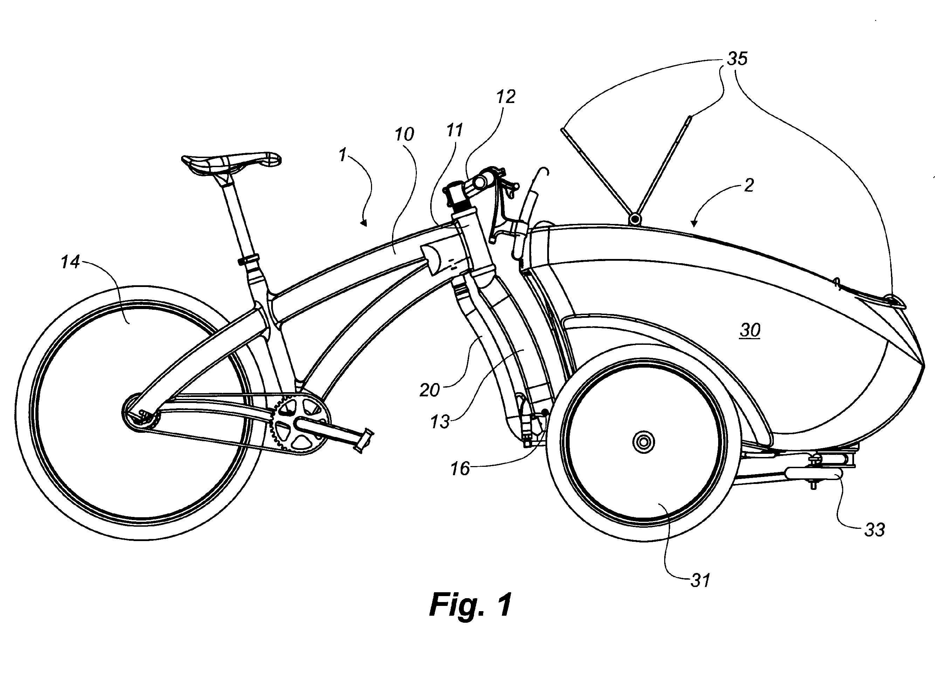

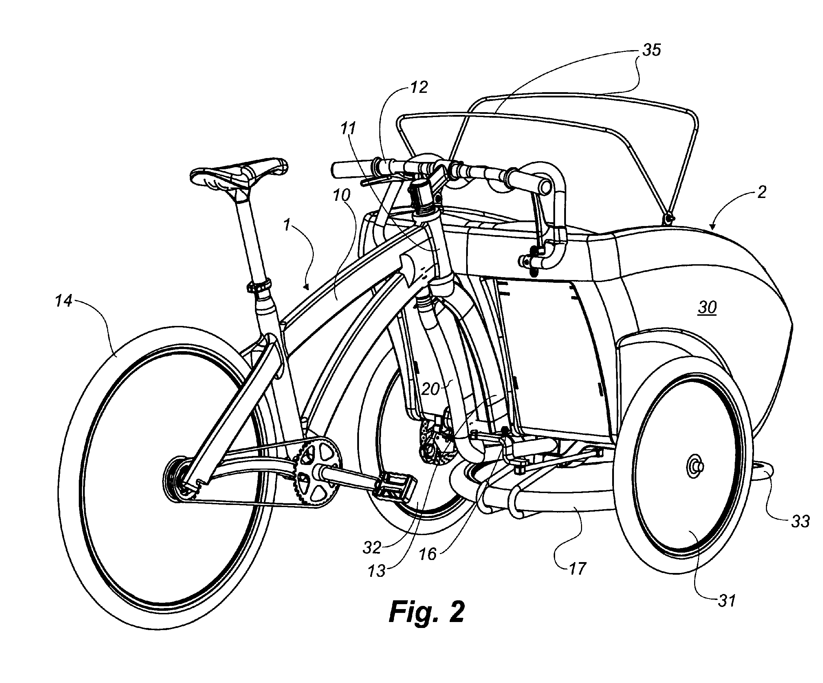

Figs. 1 and 2 show a bike combination including a bike 1 and a bike trailer 2.

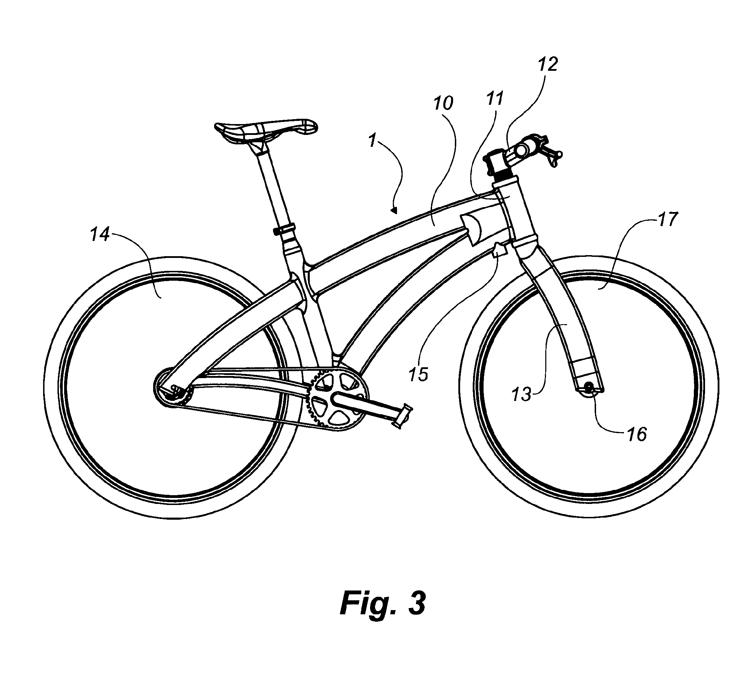

The bike 1, seen separately in Fig. 3, includes a frame 10 and a head tube 11, which is part of the frame 10. Handlebars 12 are connected by means of the head tube 11 to the front fork 13, the lower free end 16 of which is connected to the hub on a front wheel 17. A frame coupling device in the form of a coupling tube 15 is located right behind the head tube 11 on the frame 10.

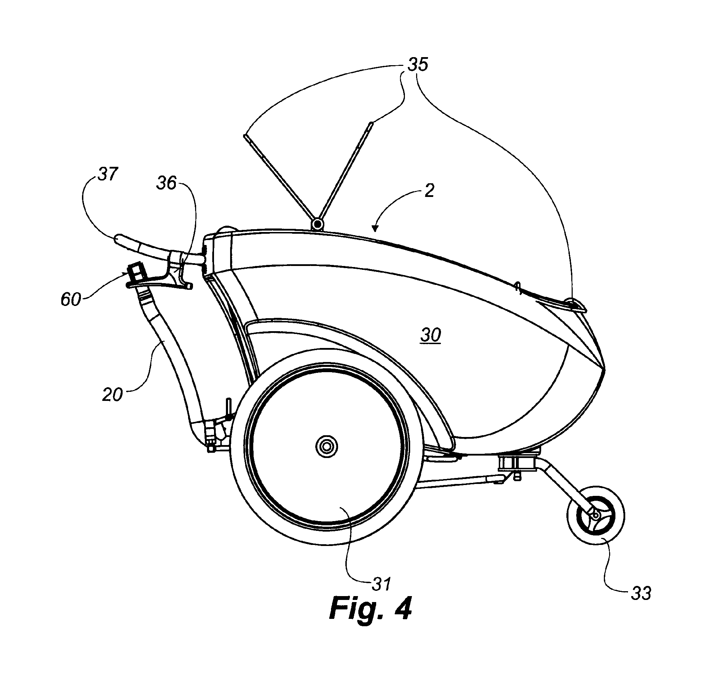

The trailer 2, seen separately in Fig. 4, includes a first frame part 20, a first wheel 31 and a second wheel 32 (shown in Fig. 2) placed substantially parallel to each other, and which can be steered around a steering axis with a view to adjusting the direction of travelling of the trailer 2, and a trailer coupling device in the form of an expansion device 60 placed at one end of the first frame part 20. The expansion device 60 is adapted to be inserted into the coupling tube 15 at the bike in such a way that, after expansion, the expansion device 60 abuts the inner side of the coupling tube 15 in a locking way, whereby the frame 10 of the bike 1 is connected rigidly to the first frame part 20 of the trailer 2. This situation is shown both in Fig. 1 and Fig. 2.

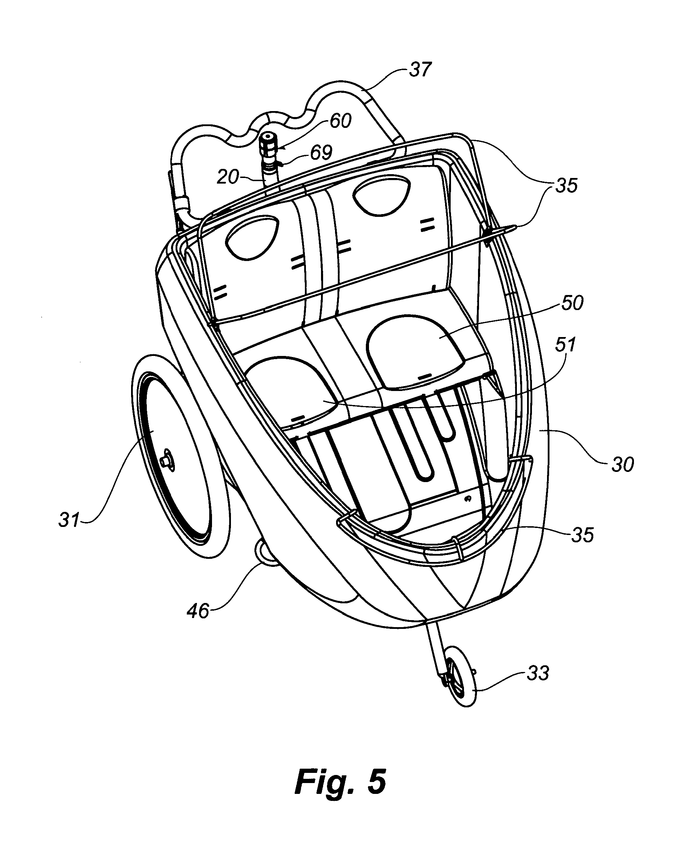

Furthermore the bike trailer 2 includes a trailer chassis 30. Handlebars 37 are connected to the trailer chassis 30. The handlebars 37 are adapted to be folded down so that the handlebars 37 can be used to either push or pull the trailer 2 when decoupled from the bike 1. With a view to using the bike trailer 2 in a decoupled state, the trailer 2 is further provided with a third wheel 33 at the front of the chassis 30 of the bike trailer 2. This third wheel 33 is preferably formed so that it can be folded up under the trailer chassis 30 when the bike trailer 2 is used together with the bike 1, and that it can be folded down when the trailer 2 is used as a push or pull barrow. Furthermore the handlebars 37 are formed so that they extend beyond the first frame part 20 and the expansion device 60. In this way the person using the barrow can avoid soiling his/her clothes with oil or other dirt accumulated on the expansion device 60 and the first frame part 20 when the trailer 2 has been used as a bike trailer (see also Fig. 5).

The trailer chassis 30 is furthermore provided with three hood holders 35 adapted to hold a hood. The hood can be mounted on the rear end of the bike trailer close to the handlebars 37. The hood is preferably provided with a rubber band or an elastic which can be pulled over the hood holder 35 located at the front end of the bike trailer 2 (see also Fig. 5). The two hood holders 35 extending from the trailer chassis 30 are also connected to the hood and can be turned so that the hood is tightened. Furthermore these two hood holders can be folded inwards towards the rear end of the bike trailer 2, whereby the hood can be folded away.

The bike trailer 2 is coupled to the bike 1 by inserting the expansion device 60 to the coupling tube 15 located right behind the head tube 11 on the frame 10 of the bike 1, and fastening it in the coupling tube 15 by means of a quick lock device device 69. The expansion device 60 with the quick lock device device 69 is described more detailed below.

Alternatively the head tube 11 and the coupling tube 15 can have a common axis so that there is access to the coupling tube 15 between the legs of the front fork. Prior to the coupling the front wheel 17 is removed from the front fork 13 of the bike, preferably by means of a quick release system, known per se, for the front wheel 17. Hereafter the free end 16 of the front fork 13 can be coupled with the steering mechanism of the trailer, again preferably by means of a known quick release system. The very coupling between the front fork 13 and the steering mechanism is described in detail below.

According to another, not shown, embodiment of the invention, the coupling device 60 is formed so as to be coupled to a frame 10 of an arbitrary bike 1, e.g. by being secured around a part of the frame 10. At the same time the very coupling between the front fork 13 and the steering mechanism of the bike trailer 2 is formed so that the front fork 13 of an arbitrary bike can be coupled to the steering mechanism. This can be done as the size of bike wheels and thus of the form of a front fork 13 often comply with some determined cycle standards.

In coupled state the driving mechanism of the bike 1 comprising pedals, sprockets, chain and rear wheel 14 is used to ride the bike 1 together with the bike trailer 2.

The bike trailer 2 is preferably provided with a securing device for storing the front wheel 17 under the trailer chassis as shown in Fig. 2. In this way the front wheel does not soil the bike trailer as by e.g. being stored inside the very trailer chassis 30.

As seen in Fig. 5, the trailer chassis is provided with two child seats 50 and 51. These child seats 50, 51 are preferably provided with seat belts, such as five point belts so that a child or two children can be secured during transport for safety reasons, this also being a legal requirement in most countries. Of course the seat belts can also be used to secure goods in the bike trailer 2.

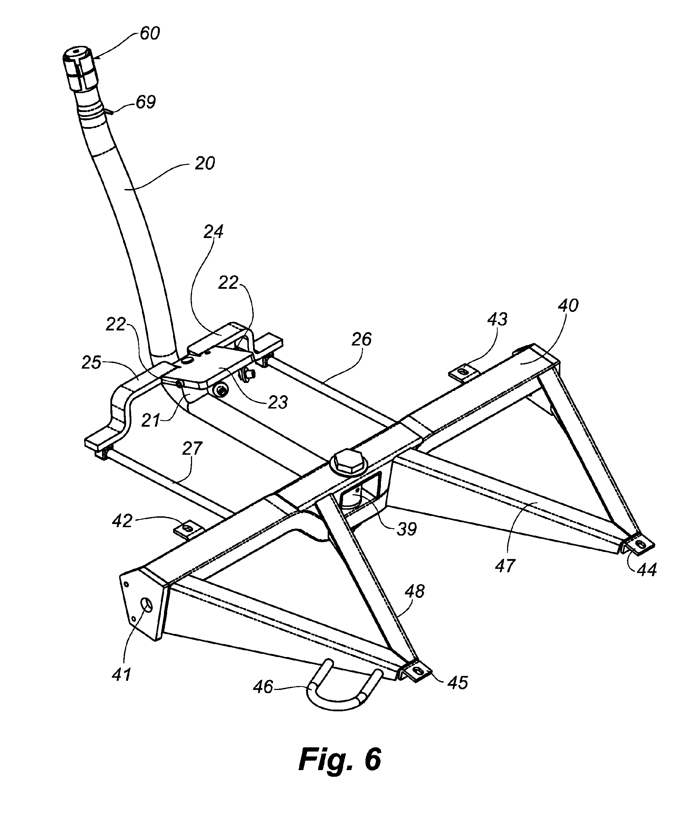

The handlebars and frame of the bike trailer 2 can be seen in Fig. 6. The first frame part 20 has a substantially horizontal portion and an upwardly extending portion. The trailer coupling device 60 is located at the upper end of the upwardly extending portion while the foremost end of the substantially horizontal portion is connected to a transverse frame part 40 via a first swivel joint 39.

The frame of the bike trailer 2 further includes two triangular frames 47, 48 connected to the transverse frame part 40. Each of said two triangular frames has a mounting hole 44, 45, and the transverse frame part has two mounting holes 42, 43. The trailer chassis 30 of the bike trailer 2 is screwed to the frame via the four mounting holes 42-45. A mounting hole 41 is located at each end of the transverse frame part to secure the first trailer wheel 31 and the second trailer wheel 32 respectively.

A steering bracket 23 is connected to the horizontal portion of the first frame part 20 via a second swivel joint 21. At one side the steering bracket 23 has a first wing 24 pivotally connected to one end of a first steering arm 26, while the second end of the first steering arm 26 is pivotally connected to the transverse frame part 40 at an area spaced from the first swivel joint 39. At the other side the steering bracket 23 has a corresponding steering device including a second wing 25 and a second steering arm 27.

The steering bracket further comprises two mounting projections 22 onto which the front fork 13 of the bike 1 can be fastened, preferably by means of a known quick release mechanism, for instance known from racer bikes. Preferably the two mounting projections are dimensioned so that they fit most front forks.

When the front fork 13 of the bike 1 is secured to the mounting projections 22, turning the handlebars 12 of the bike 1 results in a turning of the front fork 13 of the bike 1 and thus also in a turning of the steering bracket 23, which is made possible by the second swivel joint 21. When the steering bracket 23 is turned, the two wings 24, 25, and the two steering arms 26, 27 respectively push and pull the transverse frame part 40 at either side of the swivel joint 39 resulting in a turning of the transverse frame part 40 and thus the bike trailer 2.

A bracket 46 is placed at the second triangular frame 48. The bracket 46 has two functions. Firstly it can be used as a foot support when stepping into or out of the trailer chassis 30, and secondly it can be used to lock the bike trailer 2, for instance by passing a chain lock through the bracket 46.

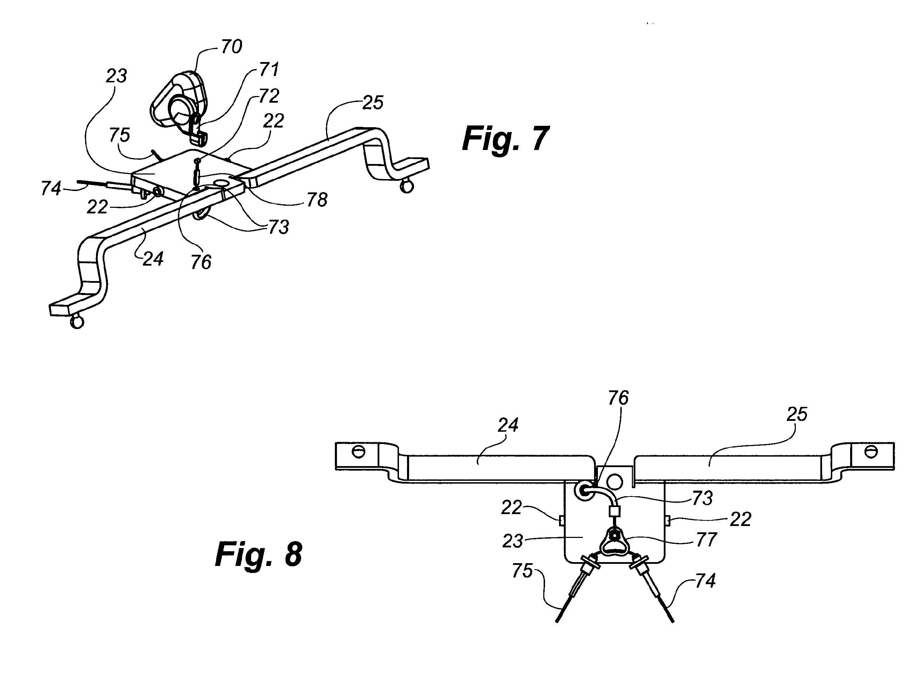

Figs. 7 and 8 show a portion of the brake system of the bike trailer 2, and how said brake system is coupled to the brake system of the bike 1. The brake system of the bike trailer 2 has a first brake cable 73 which at a first end is connected to a cable distributor 77 which in turn is connected to a first brake cable part 74 and a second brake cable part 75. The first brake cable part 74 and the second brake cable part 75 can be parts of the same brake cable or two separate brake cables which are connected to the cable distributor 77. The two brake cable parts 74, 75 are connected to brake mechanisms at the first trailer wheel 31 and the second trailer wheel 32 respectively. The brake mechanisms are preferably in the form of disc brakes but can just as well be rim brakes or other ordinary brake systems. A pull in the first brake cable 73 results in the cable distributor 77 being pulled, which again pulls the two brake cable parts 74, 75 resulting in a braking of the two trailer wheels 31, 32.

The first brake cable 73 is passed through a hole 76 in the steering bracket 23 and is provided with a cable securing 78 and a head 72 at its other end. The cable securing 76 has a size bigger than the cable hole 78 thus ensuring that the cable does not slip entirely through the cable hole 76.

The brake system of the bike 1 has a brake coupling device 70 with a slotted grip device 71. The slotted grip device 71 and the head 72 of the first brake cable 73 are adapted to engage with each other. The brake coupling device 70 is connected to a brake cable which is connected to a brake lever at the bike 1, preferably on the handlebars 72. Thus a braking of the wheels 31, 32 of the bike trailer 2 can be caused by means of the brake lever when the grip device 71 is engaged with the head 72.

The coupling (or decoupling) between the brake systems of the bike 1 and the bike trailer 2 can be effected very quickly, and ensures that the biker trailer 2 can be braked securely subsequently.

There are several options for the cooperation of the brake systems. For instance, the bike trailer 2 can have two brake systems. One of the brake systems can be permanent, said brake system for instance being activated by means of the brake lever 36. The second brake system can be intended for being coupled with the brake system of the bike. Preferably the permanent brake system can be used as a parking brake when the bike trailer 2 is used as a push or pull barrow.

Alternatively the bike trailer 2 can also be provided with a brake coupling device 70 corresponding to that of the bike 1 enabling a simple shift from one brake system to the other.

According to a second embodiment, the bike trailer 2 is only provided with a permanent brake system which can be activated by means of the brake lever 36, the brake lever 36 being installed on the handlebars 37 of the trailer when the bike trailer 2 is used as a push or pull barrow, and installed on the handlebars 12 of the bike 1 when the bike trailer is coupled to the bike 1. According to said embodiment the brake lever 36 is preferably provided with a coupling device so that the brake lever can be moved simply and quickly from the handlebars 37 of the trailer to the handlebars 12 of the bike 1 or vice versa.

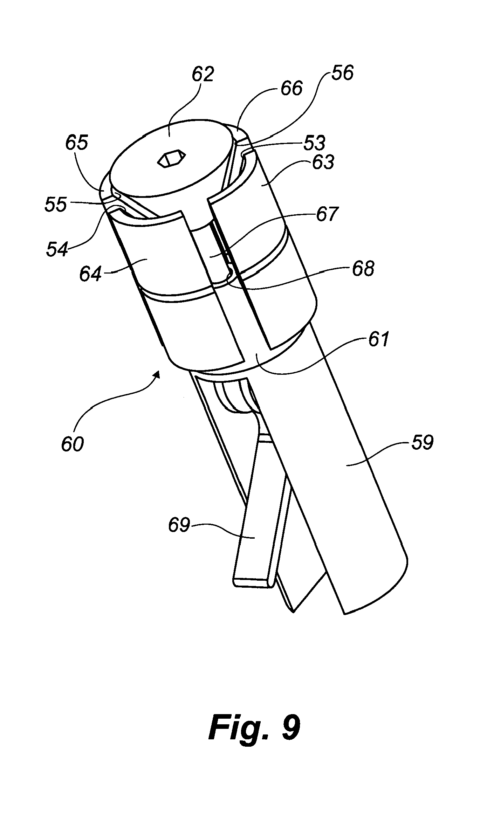

Fig. 9 shows the expansion device 60 in detail. The expansion device 60 includes a housing 59 with an outwardly facing cone surface 61 and a body 62 which is slidable in relation to the housing 59, and which has a second outwardly faced cone surface. Furthermore the trailer coupling device is provided with four expansion parts 63-66, each of which has an inwardly faced cone surface 53-56 abutting the cone surface 61 of the housing and the cone surface of the sliding body 62. The four expansion parts 53-56 are either held together elastically or by means of spring action.

The sliding body 62 is connected to a quick lock device 69 via a pull bar 67. The quick lock device 69 is pivotally mounted inside the housing 59, and on turning said quick lock device 69 the sliding body 62 is pulled in the direction towards the housing 59 causing a radial outward movement of the expansion parts 63-66. Preferably the quick lock device 69 has a dead centre as to be self-locking on turning. It can also work by means of friction or by means of other self-locking systems.

In this way the expansion device 60 can be coupled with the coupling tube 15 of the frame 10 of the bike 1 in a simple and secure way. Alternatively the head tube 11 of the frame 10 can be formed so as to receive the expansion device 60 via a hole between the legs of a front fork 13. In this way the frame 10 does not need to be provided with the additional coupling tube 15.

According to an alternative embodiment, the trailer coupling device 60 is adapted to be coupled to an arbitrary frame 10, for instance by having a gripping member for gripping around the frame. In this way the bike trailer 2 can be coupled to an ordinary bike 1.

The combined bike and bike trailer system is particularly practical for families with children as the combination both can be used as an ordinary two-wheel bike, a bike for transporting children or a carrier bike and as a separate push barrow or pram. At the same time the various parts can be disconnected or coupled quickly by means of quick lock device devices and other quick release systems, whereby the system can be converted very quickly from one type of vehicle to the other type of vehicle.

With said system the family father can for instance drive his children to the nursery school or day nursery in the morning by means of the coupled bike 1 and the bike trailer 2. Hereafter he can decouple the bike trailer 2, remove the front wheel 17 from the underside of the trailer chassis 30 and fasten the front wheel 17 onto the front fork 13. Then he can ride on to work by means of the ordinary two-wheel bike 1. The bike trailer 2 can be left at the nursery school. In the afternoon the family mother can for example pick up the children by means of a second bike 1. Here the front wheel 17 is decoupled from her bike 1 and stored below the trailer chassis 30. Subsequently the bike trailer 2 is coupled to the bike 1, and the mother can transport the children home.

The system is also very practical when the family has an outing for example. In this case the children can be transported by means of the bike trailer 2 and the bike 1, whereupon the bike part 2 can be decoupled, the third wheel 33 of the trailer 2 be folded down and the trailer used as a pram.

The invention has been described with reference to preferred embodiments. A plurality of changes can be made without departing from the idea of the invention. Modifications and variations which are obvious for a person skilled in the art are considered to be within the scope of the present invention.

### List of reference numerals

- 1: bike
- 2: bike trailer
- 10: frame
- 11: head tube
- 12: handlebars
- 13: front fork
- 14: hind wheel
- 15: coupling tube/frame coupling device
- 16: free end of the front fork
- 17: front wheel
- 20: first frame part
- 21: second swivel joint
- 22: mounting projection
- 23: steering bracket
- 24: first wing
- 25: second wing
- 26: first steering arm
- 27: second steering arm
- 30: trailer chassis
- 31: first trailer wheel
- 32: second trailer wheel
- 33: third trailer wheel
- 35: hood holder
- 36: brake lever
- 37: handlebars of the trailer
- 39: common axis of rotation/first swivel joint
- 40: transverse frame part
- 41: mounting hole for trailer wheel
- 42: mounting hole for trailer chassis
- 43: mounting hole for trailer chassis
- 44: mounting hole for trailer chassis
- 45: mounting hole for trailer chassis
- 46: bracket
- 47: first triangular frame
- 48: second triangular frame
- 50: child seat
- 51: child seat
- 53: inwardly faced cone surface
- 54: inwardly faced cone surface
- 55: inwardly faced cone surface
- 56: inwardly faced cone surface
- 59: housing
- 60: expansion device/trailer coupling device
- 61: first outwardly faced cone surface
- 62: sliding device
- 63: expansion part
- 64: expansion part
- 65: expansion part
- 66: expansion part
- 67: pull bar
- 68: hole
- 69: quick lock device
- 70: brake coupling device
- 71: slotted grip device
- 72: head
- 73: first brake cable
- 74: first brake cable
- 75: second brake cable
- 76: cable hole
- 77: cable distributor
- 78: cable securing/securing device

## Claims

1. Bike trailer (2) for coupling to a bike (1), said bike including a frame (10), a front fork (13) being pivotal around a steering axis in relation to the frame (10), and a front wheel (17) located at the free end (16) of the front fork (13), said bike trailer including:
- a first frame part (20),
- a frame coupler (60) located on the first frame part (20) and by means of which the first frame part (20) can be coupled stiffly to the frame (10) of the bike (1),
- a first wheel (31) and a second wheel (32) placed substantially parallel to each other, and which can be steered around a steering axis with a view to adjusting the direction of travelling, and
- a steering mechanism dirigibly connected to the wheels (31, 32), so that the direction of travelling can be adjusted by means of the steering mechanism,
- said steering mechanism including a steering bracket (23) adapted to be coupled to the free end (16) of the front fork (13) when the front wheel (17) of the bike (1) is removed,
**characterised in that**
the steering axis of the first wheel (31) and the steering axis of the second wheel (32) are displaced in the longitudinal direction of the bike trailer (2) in relation to the steering axis of the bike when the bike trailer (2) is coupled to the bike (1).

2. Bike trailer (2) according to claim 1, **characterised in that** the first wheel (31) and the second wheel (32) are adapted to pivot around a common steering axis and are interconnected via a transverse frame part (40).

3. Bike trailer (2) according to claim 2, **characterised in that** the first frame part (20) is connected to the transverse frame part (40) via a first swivel joint (39) defining the common steering axis, that the steering bracket (23, 24, 25) is connected to the first frame part (20) via a second swivel joint (21), and that at least one steering arm (26, 27) is pivotably connected to the steering bracket (23, 24, 25) and the transverse frame part (40).

4. Bike trailer (2) according to one of the preceding claims, **characterised in that** the trailer has a brake system, where a first brake cable (73) at a first end is connected to a cable distributor (77), said cable distributor in turn being connected to a first brake cable part (74) and a second brake cable part (75), which are connected to braking mechanisms, preferably in the form of rim brakes or disc brakes at the first wheel (31) and the second wheel (32) respectively, a pull of the first brake cable (73) causing a braking of the first wheel (31) and the second wheel (32).

5. Bike combination including a bike trailer (2) according to one of the preceding claims and a bike (1) including a frame (10), a front fork (13) being pivotal around a steering axis in relation to the frame (10), and a front wheel (17) placed at the free end (16) of the front fork (13).

6. Bike combination according to claim 5, **characterised in that** the frame (10) is provided with a frame coupling device (15) adapted to be coupled to the frame coupler (60) located on the first frame part (20) of the bike trailer (2), whereby the frame (10) and the first frame part (20) are interconnected stiffly.

7. Bike combination according to claim 6, **characterised in that** the frame coupling device (15) is formed as a coupling pipe (15), and the frame coupler (60) is formed as an expansion device (60) adapted to be inserted into the coupling tube (15) in such a way that, after expansion, the expansion device (60) lockingly abuts the inner side of the coupling organ (15).

8. Bike combination according to claim 7, **characterised in that** the expansion device (60) includes a first outwardly facing cone surface (61) and at least one expansion part (63, 64, 65, 66) with a first inwardly facing cone surface (53, 54, 55, 56) abutting the first outwardly facing cone surface (61), an axial displacement of the expansion part (63, 64, 65, 66) in relation to the first outwardly facing cone surface (61) causing a radial outward displacement of the expansion part (63, 64, 65, 66).

9. Bike combination according to claim 8, **characterised in that** the expansion device (60) includes a housing (59) including the first outwardly facing cone surface (61) and a body (62) with a second outwardly facing cone surface, said body being slidable in relation to the housing (59), and that the expansion part (63, 64, 65, 66) includes a second inwardly facing cone surface (53, 54, 55, 56) abutting the second outwardly facing cone surface.

10. Bike combination according to claim 9, **characterised in that** the expansion device (60) includes a quick lock device (69), which pulls the slidable body (62) in the direction of the house (59) when pivoted.

11. Bike combination according to one of the claims 9-10, **characterised in that** the expansion device (60) includes at least two, preferably four, expansion parts (63, 64, 65, 66) jointly defining a bush with an inwardly facing cone surface at both ends.

12. Bike combination according to one of the claims 5-11, **characterised in that** the bike (1) has a brake system, which can be coupled with the brake system of the bike trailer (2).

13. Bike combination according to claim 12 and claim 4, **characterised in that** the brake system of the bike (1) has a brake coupling device (70), including a slotted grip device (71), and that the first brake cable (73) of the bike trailer has a head (72) at a second side, said head being adapted to engage the slotted grip organ (71), said brake coupling device (70) being connected to the brake cable of the bike which is preferably connected to the brake lever of the bike (1).
